# FASCICULE DE BREVET EUROPEEN

(11) **EP 3 261 920 B1**
(45) Date de publication et mention de la délivrance du brevet: **27.03.2019**
(21) Numéro de dépôt: 16707700.7
(22) Date de dépôt: 26.02.2016
(51) Int. Cl.: B63G 8/18, B63G 8/42, G01C 13/00, G01V 1/38

(54) **POISSON A PORTANCE HYDRODYNAMIQUE VARIABLE ET LIGNE DE REMORQUAGE COMPRENANT LE POISSON**
SCHLEPPSENSOR MIT VARIABLEM HYDRODYNAMISCHEM AUFTRIEB UND SCHLEPPTAU MIT DEM SCHLEPPSENSOR
FISH WITH VARIABLE HYDRODYNAMIC LIFT AND TOW LINE COMPRISING THE FISH

(30) Priorité: 27.02.2015 FR 1500386
(43) Date de publication de la demande: 03.01.2018
(73) Titulaire: Thales, 92400 Courbevoie (FR)
(72) Inventeur: WARNAN, François, 29200 Brest (FR); JOURDAN, Michaël, 29200 Brest (FR); VICARIOT, Philippe, 29200 Brest (FR); LAGADEC, Jean, 29200 Brest (FR)
(74) Mandataire: Collet, Alain
(86) Numéro de dépôt international: PCT/EP2016/054152
(87) Numéro de publication internationale: WO 2016/135326

(56) Documents cités:
- FR-A1- 2 655 940
- US-A- 3 412 704
- US-A- 3 611 975
- US-A- 3 680 520

## Description

L'invention concerne les corps remorqués derrière un navire. Ces objets sont communément appelés poissons. Ils sont notamment utilisés dans le domaine des sonars à immersion variable. Le poisson est alors muni d'antennes d'émission ou de réception acoustique. Dans un autre domaine, le document US 3 680 520 décrit un système de réglage de la profondeur d'un câble sismique remorqué.

Pour réaliser correctement sa mission, le poisson est doté de caractéristiques hydrodynamiques adéquates. Entre autres, le poisson est configuré pour développer des forces verticales importantes qui lui permettent de plonger à une profondeur souhaitée malgré la vitesse de remorquage qui tend à le faire remonter en surface.

Le moyen le plus simple pour développer ces forces verticales est d'augmenter le poids du poisson au-delà de la poussée d'Archimède. Le poids à l'avantage d'être constant quelle que soit la vitesse du navire qui tracte le poisson. Un autre moyen consiste à disposer sur le poisson un ensemble d'ailes hydrodynamiques dont la portance est dirigée vers le bas. Étant donnée la densité de l'eau, ces ailes sont assez trapues et se logent facilement sur un corps remorqué. La force de portance hydrodynamique vers le bas augmente avec le carré de la vitesse du poisson par rapport à l'eau. De ce fait, plus la vitesse est importante et plus le poisson se trouve maintenu en immersion.

Les sonars remorqués sont principalement utilisés dans le domaine militaire. Il se peut que le navire qui opère avec son sonar immergé en profondeur ait à prendre soudainement la fuite, par exemple en cas de prise en chasse par une torpille. Dans ce cas, étant donné l'urgence, il n'est pas possible de remonter à bord le corps remorqué. La vitesse de fuite du navire doit pouvoir être supportée à la fois par le corps remorqué et par le câble de remorquage du poisson. En effet, le câble subit une trainée hydrodynamique qui augmente avec la vitesse.

Le câble doit être dimensionné pour supporter une tension maximale générée par le navire pour une vitesse de fuite donnée. D'autres éléments, tels que la machine de remorquage ainsi que ses attaches sur le pont du navire devront également être dimensionnés pour résister à cette tension maximale. Une vitesse de fuite élevée impose un surdimensionnement de tous les éléments intervenant dans l'opération de remorquage. Le surdimensionnement du câble conduit à augmenter ses dimensions et à accroitre encore sa trainée hydrodynamique et par conséquent l'effort de traction sur le câble.

Pendant la fuite du navire, pour limiter la tension du câble, une manoeuvre consiste à remonter à bord autant de câble que possible. Pour permettre une telle manoeuvre, le treuil de remorquage doit aussi être surdimensionné.

Pour un équipement donné, deux solutions subsistent. La première consiste dans la limitation de la vitesse de fuite du navire et la seconde en cas extrême consiste à couper la ligne de remorquage afin d'en éviter la rupture intempestive. Ceci entraine bien sûr la perte du corps remorqué.

L'invention vise à pallier tout ou partie des problèmes cités plus haut en proposant de limiter en cas de besoin les efforts hydrodynamiques sur le poisson.

A cet effet, l'invention a pour objet un poisson destiné à être immergé et remorqué par un câble, le poisson comprenant un bâti configuré pour se déplacer dans l'eau selon une direction principale horizontale et au moins un appendice configuré pour générer pour le poisson une portance hydrodynamique dirigée vers le bas lorsque le poisson se déplace dans l'eau sous l'effet du remorquage, caractérisé en ce que l'appendice est orientable entre une première position générant une valeur maximale de la portance hydrodynamique du poisson et une seconde position générant une valeur réduite de la portance hydrodynamique du poisson, en ce que le poisson comprend un verrou qui dans une configuration verrouillée maintient l'orientation de l'appendice dans la première position et qui dans une configuration déverrouillée libère l'orientation de l'appendice, et en ce que l'appendice est configuré pour passer de la première position à la seconde position sous l'effet d'une portance hydrodynamique propre à l'appendice.

En réduisant la portance hydrodynamique de l'aile, le poisson tend à remonter vers la surface de l'eau. Cet avantage peut être utile dans d'autres cas que la fuite du navire. En présence d'un haut fond non prévu, le corps remorqué peut buter contre ce haut fond entrainant un risque de rupture de la ligne de remorquage et une perte du corps remorqué. Le fait de ralentir le navire ne ferait qu'aggraver la situation en faisant plonger le corps remorqué. En mettant en oeuvre les moyens pour réduire la portance hydrodynamique de l'aile, le poisson tend à remonter et se trouve ainsi en meilleure position pour éviter le haut fond.

Le poisson comprend avantageusement un organe pyrotechnique configuré pour déverrouiller le verrou.

Dans la seconde position, la portance hydrodynamique du poisson est avantageusement sensiblement nulle, ou éventuellement dirigée vers le haut.

Dans un mode de réalisation, le poisson comprend au moins une aile générant principalement la portance hydrodynamique du poisson en fonction de l'orientation du bâti par rapport à la direction principale. L'appendice orientable est alors un empennage configuré pour modifier l'orientation du bâti par rapport à la direction principale. L'aile peut être fixe par rapport au bâti.

Dans un mode de réalisation, l'appendice est une aile orientable générant principalement la portance hydrodynamique du poisson qui peut comprendre un empennage fixe par rapport au bâti, l'empennage permettant de maintenir l'orientation du bâti par rapport à la direction principale.

Le poisson peut comprendre une liaison pivot permettant la rotation de l'appendice par rapport au bâti. La liaison pivot est alors décalée d'un point d'application d'une résultante d'efforts de portance hydrodynamique propre à l'appendice de sorte à permettre le passage de la première position à la seconde position sous l'effet de la portance hydrodynamique propre à l'appendice.

Le poisson peut comprendre un capteur permettant de mesurer un paramètre et un dépassement d'une valeur de seuil par la valeur mesurée peut déclencher le passage du verrou en configuration déverrouillée.

Le poisson peut comprendre deux appendices orientables. Les orientations de chacun des deux appendices sont alors coordonnées.

Le poisson est alimenté électriquement. Le verrou peut être configuré pour que l'alimentation du poisson maintienne le verrou en configuration verrouillée et pour qu'une coupure d'alimentation fasse passer le verrou en configuration déverrouillée.

L'invention a également pour objet une ligne de remorquage comprenant un poisson selon l'invention, un navire, un câble fixé au poisson, et, disposés sur le navire, des moyens de commande du verrou disposés sur le navire.

Les moyens de commandes peuvent être configurés pour être déclenchés manuellement ou automatiquement. Les moyens de commandes peuvent comprendre un interrupteur permettant d'ouvrir un circuit d'alimentation électrique du poisson. Dans le cas d'un déclenchement automatique, la ligne de remorquage peut comprendre un capteur permettant de mesurer un paramètre. Un dépassement d'une valeur de seuil par la valeur mesurée déclenche les moyens pour réduire la portance hydrodynamique de l'aile.

L'invention sera mieux comprise et d'autres avantages apparaîtront à la lecture de la description détaillée d'un mode de réalisation donné à titre d'exemple, description illustrée par le dessin joint dans lequel :
la figure 1 représente de façon schématique un navire tractant un sonar actif ;
la figure 2 représente un corps remorqué du sonar de la figure 1 ;
la figure 3 représente le navire de la figure 1 tractant le corps remorqué dans deux configurations hydrodynamiques du corps remorqué ;
la figure 4 représente un poisson comprenant deux ailes ;
la figure 5 représente un poisson comprenant une seule aile ;
les figures 6 et 7 représentent plus en détail le corps remorqué dans chacune des configurations hydrodynamiques ;
les figures 8 et 9 représentent un exemple de mise en oeuvre d'un verrou 45 configuré pour faire passer le corps remorqué d'une configuration hydrodynamique à l'autre.

Par souci de clarté, les mêmes éléments porteront les mêmes repères dans les différentes figures.

L'invention est décrite en rapport au remorquage d'un sonar par un bâtiment de surface. Il est bien entendu que l'invention peut être mise en oeuvre pour d'autres éléments remorqués et pour d'autres moyens de remorquage.

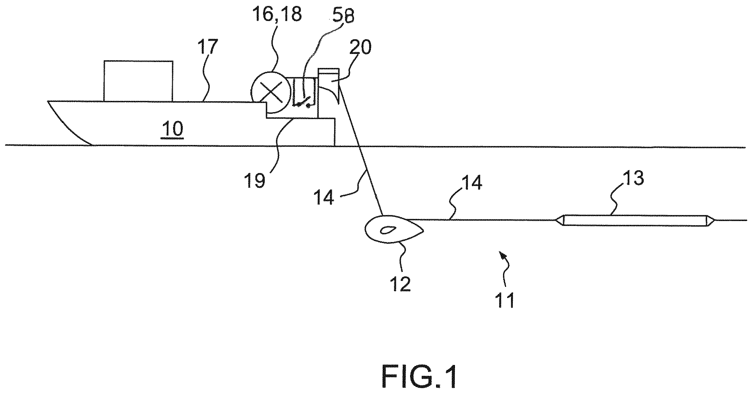

La figure 1 représente un navire 10 tractant un sonar actif 11 comprenant une antenne d'émission acoustique 12 communément appelée poisson et une antenne de réception acoustique 13 souvent appelée flûte. Le sonar 11 comprend également un câble 14 permettant de tracter les deux antennes 12 et 13. Le câble assure également l'acheminement de signaux et d'alimentations entre le navire et les antennes 12 et 13 du sonar 11. Il est également possible de prévoir deux câbles distincts, l'un pour tracter le poisson 12 et l'autre pour la flute 13, le câble tractant la flute étant alors fixé au poisson 12. L'invention concerne plus particulièrement le poisson 12 et peut être mise en oeuvre sans flute 13.

Les antennes 12 et 13 sont mécaniquement arrimées et connectés électriquement et/ou optiquement au câble 14 de manière appropriée. De manière classique, l'antenne de réception 13 est formée d'une antenne linéaire de forme tubulaire identique à celles que l'on trouve dans les sonars passifs, d'où son nom de flute, tandis que l'antenne d'émission 12 est intégrée dans une structure volumique ayant une forme s'apparentant à celle d'un poisson. La flûte de réception est généralement disposée à l'arrière, au niveau de l'extrémité du câble 14, le poisson étant positionné sur la partie du câble 14 la plus proche du navire 10. Durant une mission d'acoustique sous-marine, l'antenne 12 émet des ondes sonores dans l'eau et l'antenne de réception 13 capte d'éventuels échos provenant de cibles sur lesquelles se reflètent les ondes sonores issues de l'antenne 12.

La mise à l'eau et la sortie de l'eau des antennes 12 et 13 est réalisée au moyen d'un treuil 16 disposé sur un pont 17 du navire 10. Le treuil comprend un touret 18 dimensionné pour permettre l'enroulent du câble 14 ainsi que de l'antenne de réception 13. Le treuil 16 comprend également un châssis destiné à être fixé sur le pont du navire. Le touret 18 est apte à pivoter par rapport au châssis pour permettre l'enroulement du câble. L'enroulement du câble 14 permet de haler le poisson 12 à bord du navire 10, par exemple sur une plateforme arrière 19 prévue à cet effet.

Un chaumard 20 permet de guider le câble 14 en aval du touret 18. Le chaumard 20 constitue le dernier élément de guidage du câble 14 avant sa descente dans l'eau. Le câble 14 comprend par exemple une âme formée de conducteurs électriques et/ou optiques permettant de transmettre de l'énergie et des informations entre des équipements du sonar situés à bord du navire 10 et les antennes 12 et 13. L'âme du câble 14 est généralement recouverte d'un toron de fils métalliques assurant la tenue mécanique du câble 14 notamment à la traction. Le câble 14 peut être recouvert d'écailles configurées pour adapter son profil hydrodynamique afin de limiter sa trainée.

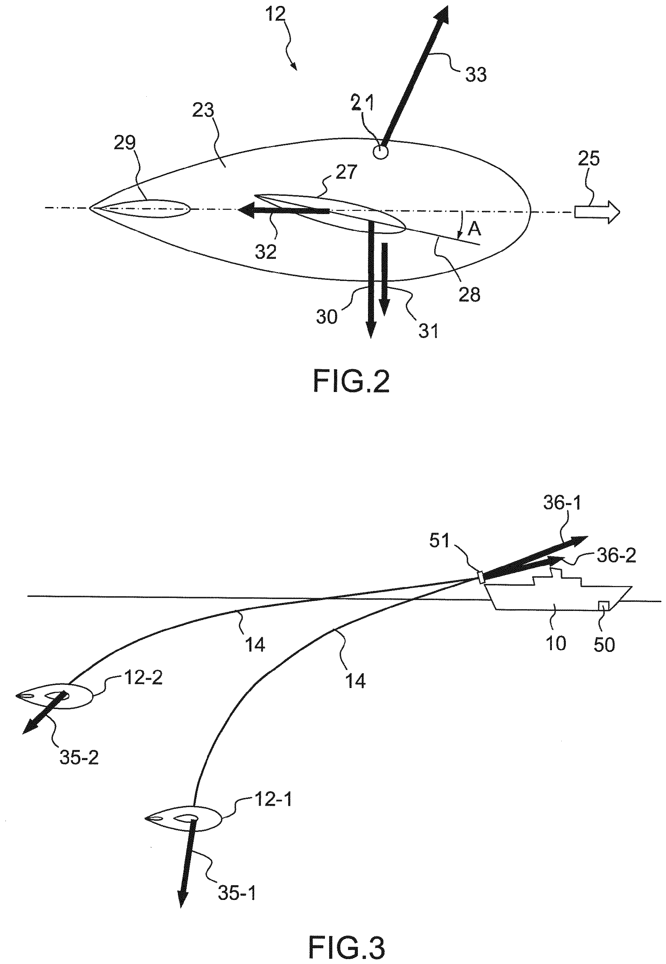

La figure 2 représente le poisson 12 de profil. Le poisson 12 comprend une accroche 21 configurée pour permettre la fixation du poisson 12 sur le câble 14. L'accroche comprend un connecteur mécanique éventuellement démontable et en cas de besoin un connecteur, par exemple électrique ou optique, permettant de faire transiter des informations et/ou de la puissance entre le poisson 12 et le câble 14. Le poisson 12 est configuré pour se déplacer dans l'eau en translation selon une direction 25 représentée horizontalement sur la figure 2. Le poisson 12 comprend un bâti 23 et au moins une aile 27 permettant de générer pour le poisson 12 une portance 30 hydrodynamique dirigée vers le bas lorsque le poisson se déplace selon la direction 25. Le poisson 12 lui-même et d'autres appendices du poisson 12 participent à la génération de la portance hydrodynamique globale du poisson 12. L'aile 27 génère principalement la portance hydrodynamique globale du poisson 12. L'aile 27 a par exemple un profil symétrique autour d'une direction 28. Pour générer la portance 30, la direction 28 de l'aile 27 est inclinée d'un angle A par rapport à la direction 25. L'angle A est orienté négativement dans le sens trigonométrique afin de diriger la portance 30 vers les bas. Le poisson 12 peut comprendre également un empennage 29 situé vers l'arrière du poisson 12 selon la direction 25. L'empennage 29 permet d'assurer la stabilité du déplacement du poisson 12 selon la direction 25. L'angle A a par exemple une valeur de l'ordre de 8°. Il est bien entendu que cette valeur peut être adaptée en fonction de la portance souhaitée et du profil de l'aile 27.

Outre la portance 30, le poisson est soumis à différentes forces lorsqu'il se déplace selon la direction 25 : son poids 31, sa trainée 32 et la traction 33 exercée par le câble 14. Pour ne pas surcharger la figure 2, on suppose l'antenne 13 absente. La présence éventuelle d'une antenne 13 augmenterait la trainée 32. En première approche, lorsque le poisson avance à vitesse constante, la somme vectorielle des différentes forces auxquelles il est soumis est nulle.

Selon l'invention, le poisson 12 comprend des moyens pour réduire la portance hydrodynamique de l'aile 27 et donc sa portance hydrodynamique globale. La portance est ici considérée comme positive lorsqu'elle est dirigée vers le bas, la réduction de la portance peut bien entendu aller jusqu'à annuler la portance et même la rendre négative, c'est-à-dire dirigée vers le haut et tendant à faire remonter le poisson 12 vers la surface. Néanmoins une telle portance négative tendrait à augmenter la résultante des efforts de traction sur le câble 14. Une remontée du poisson 12 présente surtout un intérêt lors de l'apparition d'un haut fond non prévu.

La figure 3 représente deux configurations dans lesquelles le navire 10 tracte le poisson 12. Dans la première configuration, le poisson 12 est repéré 12-1. Dans cette configuration, l'aile 27 assure une portance dirigée vers le bas. La somme vectorielle des efforts dus au poids, à la trainée et à la portance est repérée 35-1. Au niveau du navire 10, la résultante 35-1 entraine un effort de traction 36-1 sur le câble 14. Dans la seconde configuration, le poisson est repéré 12-2. Dans cette configuration, l'aile 27 n'assure plus de portance, ou une portance très réduite. La somme vectorielle des efforts dus au poids et à la trainée est repérée 35-2. Au niveau du navire 10, la résultante 35-2 entraine un effort de traction 36-2 sur le câble 14. Dans les deux configurations, la vitesse du navire 10 est la même et le module de l'effort de traction 36-2 est inférieur au module de l'effort de traction 36-1. Cette différence permet d'augmenter la vitesse du navire. Autrement dit, si toute la chaîne de remorquage (treuil, câble et poisson) est dimensionnée pour fonctionner avec un effort 36-1 à une vitesse donnée pour le navire 10, le fait de réduire la portance du poisson 12 permet d'augmenter la vitesse donnée jusqu'à atteindre un effort 36-2 dont le module est égal au module de l'effort 36-1 à vitesse inférieure.

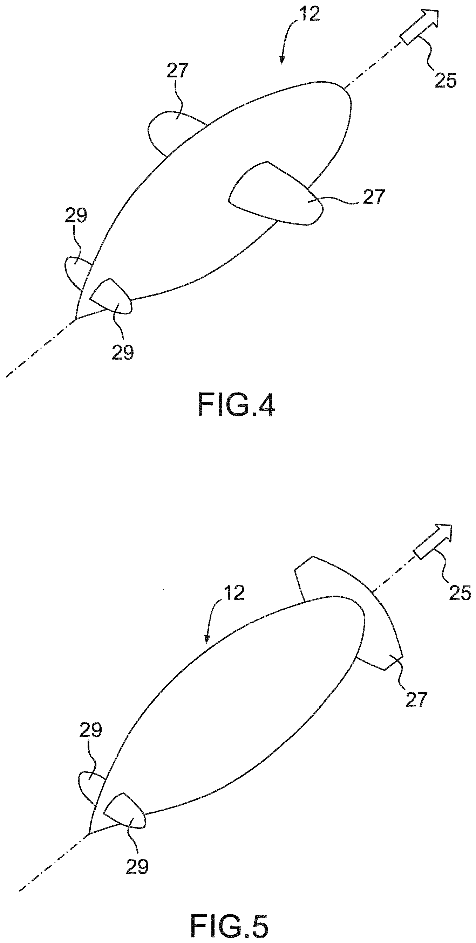

Sur la figure 2 une seule aile 27 est représentée sur un coté du poisson 12. Il est classique que le poisson comprenne deux ailes 27 disposées chacune symétriquement par rapport à la direction 25, comme représenté sur la figure 4. Dans ce cas, les moyens pour réduire la portance s'applique avantageusement de façon coordonnée aux deux ailes 27. De façon plus générale, le poisson 12 peut comprendre plus de deux ailes générant toutes une portance dirigée vers le bas. L'invention présente déjà un intérêt en réduisant la portance de l'une des ailes. A l'inverse le poisson peut ne comprendre qu'une seule aile par exemple disposée sur le nez du poisson 12 comme représenté sur la figure 5. L'invention consiste alors en la réduction de portance de cette aile unique.

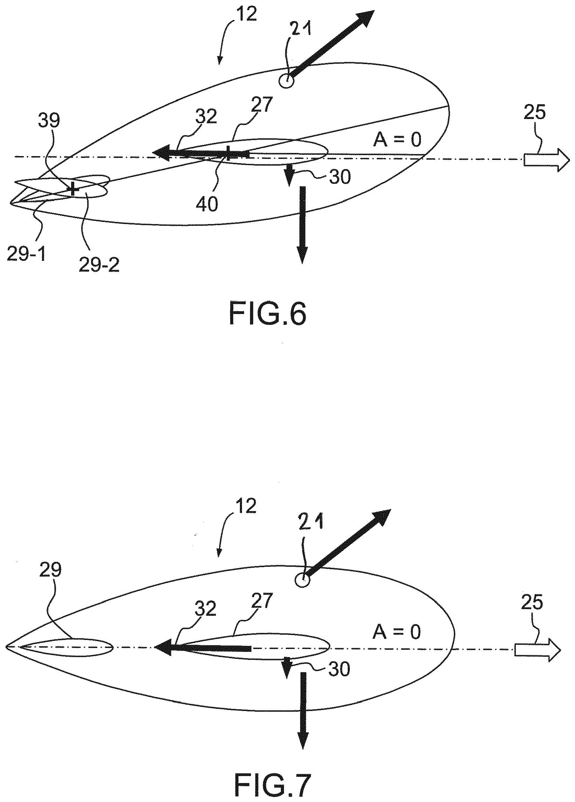

La figure 6 représente un premier mode de réalisation de moyens pour réduire la portance hydrodynamique de l'aile 27. Dans ce mode de réalisation, le poisson 12 comprend des moyens pour modifier une orientation de l'empennage 29 de façon à modifier l'orientation du poisson par rapport à la direction principale 25. L'aile 27 est avantageusement fixe par rapport au bâti 23 afin de simplifier la conception du poisson 12. Alternativement, dans ce mode de réalisation l'aile 27 peut également être mobile par rapport au bâti 23.

Plus précisément, dans la première configuration de la figure 3, correspondant à la position du poisson 12 représentée sur la figure 2, le poisson 12 se déplace dans l'eau en translation selon une direction 25 et l'aile 27 fait un angle A avec la direction 25. En manoeuvrant l'empennage 29 pour arriver à la seconde configuration de la figure 3, le poisson 12 s'oriente de façon à sensiblement aligner l'aile 27 et la direction 25. En d'autres termes, l'angle A devient sensiblement nul. Ainsi la portance 30 de l'aile 27 est fortement réduite. La portance 30 est avantageusement nulle dans cette configuration. Sur la figure 6, deux orientations de l'empennage 29 sont représentées. L'orientation 29-1 correspond à la première configuration à portance importante et l'orientation 29-2 correspond à la seconde configuration à portance réduite. Le poisson 12 comprend une liaison pivot 39 permettant la rotation de l'empennage 29. La liaison pivot 39 permet la rotation de l'empennage 29 autour d'un axe horizontal perpendiculaire à la direction 25.

La figure 7 représente un second mode de réalisation de moyens pour réduire la portance hydrodynamique de l'aile 27. Dans ce mode de réalisation, le poisson 12 comprend des moyens pour modifier une orientation de l'aile 27. Dans ce mode de réalisation, l'orientation générale du poisson 12 par rapport à la direction 25 reste inchangée lors des manoeuvres de l'aile 27. Cette orientation du poisson 12 est donnée par l'empennage 29 qui, dans ce mode de réalisation peut être fixe par rapport au bâti 23. Par contre, en modifiant l'orientation de l'aile 27, la portance de celle-ci est réduite voire annulée. Le poisson 12 comprend une liaison pivot 40 permettant la rotation de l'aile 27. La liaison pivot 40 permet la rotation de l'aile 27 autour d'un axe horizontal perpendiculaire à la direction 25.

Le second mode de réalisation présente l'avantage de ne pas modifier l'orientation du poisson 12 par rapport à direction 25. La trainée 32 reste ainsi inchangée.

Pour modifier l'orientation de l'aile 27 ou celle de l'empennage 29, il est possible de motoriser la liaison pivot correspondante, c'est-à-dire celle de l'empennage 29 ou celle de l'aile 27. Cette solution permet de faire varier la portance de façon continue. La motorisation peut être réalisée à l'aide d'un moteur électrique éventuellement associé à un réducteur ou à l'aide de moyens hydrauliques, comme par exemple un vérin. Néanmoins, la motorisation est complexe à mettre en oeuvre.

Une solution plus simple consiste à ce que le poisson 12 comprenne un verrou permettant de maintenir l'orientation permettant d'obtenir la portance hydrodynamique du poisson 12 à une valeur maximale et des moyens de déverrouillage du verrou. Autrement dit, le verrou permet de maintenir l'angle A à sa valeur permettant d'obtenir la portance souhaitée. En libérant le verrou, l'orientation de l'aile 27 ou de celle de l'empennage 29 est modifiée de façon à réduire la portance de l'aile 27. Autrement dit, les moyens pour réduire la portance hydrodynamique de l'aile sont configurés pour faire passer la portance hydrodynamique d'une première valeur discrète à une seconde valeur discrète, la première valeur correspondant à la portance maximale du poisson 12 et la seconde valeur correspondant à la portance minimale du poisson 12. On rappelle que la portance hydrodynamique du poisson a été définie vers le bas. La valeur maximale de la portance tend à entrainer le poisson vers le bas tandis que la valeur minimale ou réduite de la portance tend à faire remonter le poisson 12 vers la surface de l'eau.

L'orientation de l'aile 27 ou celle de l'empennage 29 ainsi que le verrou 45 sont indépendants de l'accroche 21 et donc de la fixation du poisson 12 sur le câble 14. Quelque soit l'orientation de l'aile 27 ou celle de l'empennage 29, le poisson 12 reste fixé au câble 14.

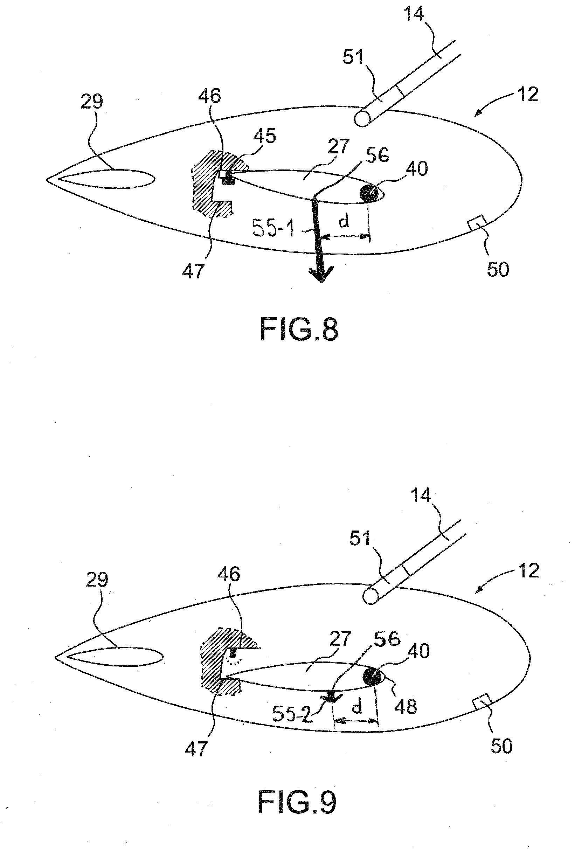

Les figures 8 et 9 représentent un exemple de mise en oeuvre d'un verrou 45 configuré pour maintenir l'aile 27 dans la première configuration de la figure 3. Il est bien entendu que cet exemple peut également être mis en oeuvre dans la variante de la figure 6 pour modifier l'orientation de l'empennage 29. La configuration verrouillée est représentée sur la figure 8. Sur la figure 9, le verrou 45 est déverrouillé, et le poisson 12 passe dans la seconde configuration de la figure 3. Le poisson 12 comprend deux butées 46 et 47 limitant le mouvement de l'aile 27 dans sa rotation autour de la liaison pivot 40. L'aile 27 peut prendre appui contre l'une ou l'autre des butées 46 et 47 au voisinage de son bord de fuite 47 et la liaison pivot 40 est disposée au voisinage du bord d'attaque 48 de l'aile 27. Le verrou 45 maintient l'aile 27 en appui contre la butée 46 et en position déverrouillée, l'aile 27 vient en appui contre la butée 47. Il est également possible d'éloigner la liaison pivot 40 du bord d'attaque 48. L'aile 27 est configurée pour passer de la configuration verrouillée à la configuration déverrouillée sous l'effet de la portance hydrodynamique propre à l'aile 27. Autrement dit, en libérant le verrou 45 la portance propre à l'aile 27 l'entraine de sa première position en appui contre la butée 46 vers sa seconde position en appui contre la butée 47.

La portance hydrodynamique propre à l'aile 27 est représentée par sa résultante 55-1 sur la figure 8 et 55-2 sur la figure 9. On a vu précédemment, que la portance hydrodynamique propre à l'aile 27 forme la contribution principale à la portance hydrodynamique globale du poisson 12. Le module de la résultante (valeur algébrique de la portance) 55-1 est beaucoup plus important que le module de la résultante 55-2. Le point d'application des deux résultantes 55-1 et 55-2 est noté 56 sur les deux figures. La liaison pivot 40 est décalée du point d'application 56 de sorte à permettre le passage de la première position à la seconde position sous l'effet de la portance hydrodynamique propre à l'aile 27. Dans l'exemple représenté, le décalage est formé par une distance d mesurée selon la direction principale 25. Autrement dit la liaison pivot 40 est située en avant par rapport au point d'application 56.

L'exemple représenté sur les figures 8 et 9 est bien adapté au mode de réalisation de la figure 7 dans lequel l'aile 27 est mobile et l'empennage 29 est fixe. Il est possible de configurer le mode de réalisation de la figure 6 pour que la libération du verrou entraine l'empennage 29 de sa position générant une portance hydrodynamique globale du poisson 12 maximale vers sa position où la portance est réduite. Cet entrainement se fait sous l'effet de la portance hydrodynamique propre à l'empennage. Comme précédemment, l'entrainement de l'empennage 29 peut se faire au moyen d'un décalage entre la position de la liaison pivot 39 reliant l'empennage 29 au bâti 23 et le point d'application de la résultante de la portance hydrodynamique propre à l'empennage 29. Comme l'empennage 29 est situé à l'arrière du poisson, la liaison pivot 39 est décalée vers l'arrière de l'empennage 29 par rapport au point d'application de la résultante de la portance hydrodynamique propre à l'empennage 29.

Le mode de réalisation représenté sur les figures 7 8 et 9 où l'aile 27 est mobile présente un avantage en positionnant la liaison pivot 40 en avant du point d'application 56. En effet, le poids de l'aile 27 contribue aussi à entrainer l'aile 27 de sa première position en appui contre la butée 46 vers sa seconde position en appui contre la butée 47.

Le verrou 45 peut être formé par tout organe mécanique permettant de maintenir l'aile 27 en appui contre la butée 46. Le verrou 45 est par exemple formé par un loquet pouvant prendre deux positions. Dans une première position, le loquet maintient l'aile 27 en appui contre la butée 46 et dans une deuxième position le loquet libère l'aile 27. Le mouvement du loquet peut être assuré par un système mécanique ou électromécanique manoeuvré à distance depuis le navire. Le signal de commande du système électromécanique transite par le câble 14.

Le verrou 45 peut alternativement être formé par un boulon pyrotechnique. De façon plus générale, les moyens de déverrouillage du verrou 45 comprennent un organe pyrotechnique. Le boulon pyrotechnique présente l'avantage de se déclencher plus rapidement qu'un loquet. Lors de la mise à l'eau du poisson 12, le boulon fixe l'aile en appui contre sa butée 46. Le boulon comprend une charge pyrotechnique permettant de le rompre et de libérer le mouvement de l'aile 27. La charge pyrotechnique est par exemple commandée à distance depuis le navire 10.

L'utilisation d'une charge pyrotechnique présente cependant un inconvénient. Il n'est pas possible de replacer l'aile 27 en position contre sa butée 46 lorsque le poisson est tracté. Le réarmement du verrou 45 nécessite une opération de changement du boulon, opération qui ne peut être réalisée qu'une fois le poisson 12 à bord du navire 10. Cet inconvénient forme tout de même une gêne minime. En effet, une fois le verrou 45 ouvert, la portance de l'aile 27 est réduite et sa profondeur diminue. Même dans cette configuration, il est toujours possible de poursuivre la mission de sonar. Les performances du sonar s'en trouvent simplement réduite.

Alternativement encore, le verrou 45 peut être réalisé au moyen d'un système magnétique ou électromagnétique maintenant l'aile 27 en contact avec la butée 46.

Une autre mode de réalisation du verrou et des butées consiste à les intégrer à la liaison pivot 40. Les butées sont alors disposées autour de l'axe de la liaison pivot. La fonction de verrou intégré à la liaison pivot peut être remplie par un organe par exemple mécanique ou magnétique maintenant l'axe de la liaison pivot en appui contre une des butées. Il est également possible de remplir la fonction de verrou à l'aide de tout type de moteur, par exemple électrique ou hydraulique, permettant la rotation de la liaison pivot 40. Le moteur électrique est par exemple associé à une contre réaction lui permettant de maintenir l'aile 27 dans une position angulaire donnée à l'aide d'un couple important.

Comme on l'a évoqué plus haut, la commande du verrou 45 peut être réalisée manuellement par un opérateur situé à bord du navire. Par exemple dés qu'un ordre d'augmentation de vitesse du navire est donné, l'opérateur peut déclencher le verrou 45 ou plus généralement la commande de réduction de portance hydrodynamique de l'aile 27.

Alternativement, la commande peut être automatisée. Le déclenchement intervient par exemple lorsqu'un capteur mesure un paramètre dont la valeur dépasse un seuil donné. Le capteur peut par exemple être un sondeur 50 équipant le poisson 12 ou le navire 10. Lorsque le sondeur détecte la présence d'un haut fond, autrement dit si la profondeur mesurée par le sondeur devient inférieure à une profondeur donnée, le résultat de la comparaison entre la profondeur mesurée et profondeur de seuil permet de déclencher la commande de réduction de portance hydrodynamique de l'aile 27. Le capteur peut également être un capteur de force 51 mesurant la traction du câble 14. Le capteur de force 51 peut mesurer la traction du câble 14 dans le poisson 12 au niveau de l'accrochage entre le câble 14 et le poisson 12 ou sur le navire 10 au niveau du treuil. Un dépassement d'une valeur de traction donnée par la traction mesurée sur le câble 14 peut déclencher la commande de réduction de portance hydrodynamique de l'aile 27.

L'automatisation de la commande peut être liée à une alimentation électrique du poisson 12. Par exemple une perte d'alimentation peut déclencher l'ouverture du verrou 45. L'alimentation électrique du poisson 12 se fait au travers du câble 14. Cette alimentation peut alimenter un électroaimant maintenant le verrou 45 fermé. En cas de perte d'alimentation électrique, due par exemple à une coupure d'un conducteur électrique, l'électro-aimant n'est plus alimenté, ce qui entraine l'ouverture du verrou 45. De façon plus générale, le verrou 45 est configuré pour que l'alimentation du poisson 12 maintienne le verrou 45 en configuration verrouillée et pour qu'une coupure d'alimentation ouvre le verrou 45.

De façon simple, en lien avec cette fonction de surveillance de l'alimentation du poisson 12, la commande manuelle du verrou 45 peut être un simple interrupteur 58 permettant d'ouvrir un circuit d'alimentation électrique du poisson 12. L'interrupteur 58 est par exemple disposé sur la plateforme arrière 19 du navire 10 à proximité du treuil 16.

## Revendications

1. Poisson destiné à être immergé et remorqué par un câble (14), le poisson (12) comprenant un bâti (23) configuré pour se déplacer dans l'eau selon une direction principale horizontale (25) et au moins un appendice (27 ; 29) configuré pour générer pour le poisson (12) une portance hydrodynamique (30) dirigée vers le bas lorsque le poisson (12) se déplace dans l'eau sous l'effet du remorquage, l'appendice (27 ; 29) est orientable entre une première position générant une valeur maximale de la portance hydrodynamique du poisson (12) et une seconde position générant une valeur réduite de la portance hydrodynamique du poisson (12), **caractérisé en ce que** le poisson (12) comprend un verrou (45) qui dans une configuration verrouillée maintient l'orientation de l'appendice (27 ; 29) dans la première position et qui dans une configuration déverrouillée libère l'orientation de l'appendice (27 ; 29), **en ce que** l'appendice (27 ; 29) est configuré pour passer de la première position à la seconde position sous l'effet d'une portance hydrodynamique propre à l'appendice (27 ; 29), **en ce que** le poisson (12) comprend deux butées (46, 47) limitant le mouvement de l'appendice (27 ; 29), **en ce que** le verrou (45) maintient l'appendice (27 ; 29) en appui contre une première des deux butées (46) et **en ce qu'**en position déverrouillée, l'appendice (27 ; 29) vient en appui contre une seconde des deux butées (47).

2. Poisson selon la revendication 1, **caractérisé en ce qu'**il comprend un organe pyrotechnique configuré pour déverrouiller le verrou (45).

3. Poisson selon l'une des revendications précédentes, **caractérisée en ce que** dans la seconde position, la portance hydrodynamique (30) du poisson (12) est sensiblement nulle.

4. Poisson selon l'une des revendications précédentes, **caractérisé en ce qu'**il comprend au moins une aile (27) générant principalement la portance hydrodynamique (30) du poisson (12) en fonction de l'orientation du bâti (23) par rapport à la direction principale (25) et **en ce que** l'appendice orientable est un empennage (29) configuré pour modifier l'orientation du bâti (23) par rapport à la direction principale (25).

5. Poisson selon la revendication 4, **caractérisé en ce que** l'aile (27) est fixe par rapport au bâti (23).

6. Poisson selon l'une des revendications 1 à 4, **caractérisé en ce que** l'appendice est une aile (27) orientable générant principalement la portance hydrodynamique (30) du poisson (12).

7. Poisson selon la revendication 6, **caractérisé en ce qu'**il comprend un empennage (29) fixe par rapport au bâti (23), l'empennage (29) permettant de maintenir l'orientation du bâti (23) par rapport à la direction principale (25).

8. Poisson selon l'une des revendications précédentes, **caractérisé en ce que** le poisson (12) comprend une liaison pivot (39 ; 40) permettant la rotation de l'appendice (27, 29) par rapport au bâti (23) et **en ce que** la liaison pivot (39 ; 40) est décalée d'un point d'application (56) d'une résultante (55-1, 55-2) d'efforts de portance hydrodynamique propre à l'appendice (27, 29) de sorte à permettre le passage de la première position à la seconde position sous l'effet de la portance hydrodynamique propre à l'appendice (27, 29).

9. Poisson selon l'une des revendications précédentes, **caractérisé en ce qu'**il comprend un capteur (50, 51) permettant de mesurer un paramètre et **en ce qu'**un dépassement d'une valeur de seuil par la valeur mesurée déclenche le passage du verrou (45) en configuration déverrouillée.

10. Poisson selon l'une des revendications précédentes, **caractérisé en ce qu'**il comprend deux appendices (27 ; 29) orientables, et **en ce que** les orientations de chacun des deux appendices (27 ; 29) sont coordonnées.

11. Poisson selon l'une des revendications précédentes, **caractérisé en ce que** le poisson (12) est alimenté électriquement, **en ce que** le verrou (45) est configuré pour que l'alimentation du poisson (12) maintienne le verrou (45) en configuration verrouillée et pour qu'une coupure d'alimentation fasse passer le verrou (45) en configuration déverrouillée.

12. Ligne de remorquage **caractérisée en ce qu'**elle comprend un poisson (12) selon l'une des revendications 1 à 8, un navire (10), un câble (14) fixé au poisson (12), et, disposés sur le navire (10), des moyens de commande du verrou (45).

13. Ligne de remorquage selon la revendication 12, **caractérisée en ce que** les moyens de commandes sont configurés pour être déclenchés manuellement.

14. Ligne de remorquage selon la revendication 13 mettant en oeuvre un poisson selon la revendication 11, **caractérisée en ce que** les moyens de commandes comprennent un interrupteur (58) permettant d'ouvrir un circuit d'alimentation électrique du poisson (12).

15. Ligne de remorquage selon la revendication 12, **caractérisée en ce qu'**elle comprend un capteur (50, 51) permettant de mesurer un paramètre et **en ce qu'**un dépassement d'une valeur de seuil par la valeur mesurée déclenche le passage du verrou (45) en configuration déverrouillée.

## Patentansprüche

1. Schleppfisch, der dazu bestimmt ist, untergetaucht und von einem Seil (14) geschleppt zu werden, wobei der Schleppfisch (12) ein Gehäuse (23) umfasst, das dazu konfiguriert ist, sich im Wasser entlang einer horizontalen Hauptrichtung (25) zu bewegen, und mindestens einen Fortsatz (27; 29), der dazu konfiguriert ist, für die Schleppsonde (12) einen hydrodynamischen Auftrieb (30) zu erzeugen, welcher nach unten gerichtet ist, wenn sich der Schleppfisch (12) unter der Wirkung des Schleppens im Wasser bewegt, wobei der Fortsatz (27; 29) zwischen einer ersten Position, die einen maximalen Wert des hydrodynamischen Auftriebs des Schleppfisches (12) erzeugt, und einer zweiten Position, die einen verminderten Wert des hydrodynamischen Auftriebs des Schleppfisches (12) erzeugt, ausrichtbar ist, **dadurch gekennzeichnet, dass** der Schleppfisch (12) eine Verriegelung (45) umfasst, die in einer verriegelten Konfiguration die Ausrichtung des Fortsatzes (27; 29) aufrechterhält und die in einer entriegelten Konfiguration die Ausrichtung des Fortsatzes (27; 29) freigibt, dass der Fortsatz (27; 29) dazu konfiguriert ist, unter der Wirkung des spezifischen hydrodynamischen Auftriebs des Fortsatzes (27; 29) aus der ersten Position in die zweite Position überzugehen, dass der Schleppfisch (12) zwei Anschläge (46, 47) umfasst, die die Bewegung des Fortsatzes (27; 29) begrenzen, dass die Verriegelung (45) den Fortsatz (27; 29) an einem ersten der beiden Anschläge (46) in Anlage hält und dass der Fortsatz (27; 29) in der entriegelten Position an einem zweiten der beiden Anschläge (47) in Anlage kommt.

2. Schleppfisch nach Anspruch 1, **dadurch gekennzeichnet, dass** er ein pyrotechnisches Element umfasst, das dazu konfiguriert ist, die Verriegelung (45) zu entriegeln.

3. Schleppfisch nach einem der vorhergehenden Ansprüche, **dadurch gekennzeichnet, dass** der hydrodynamische Auftrieb (30) des Schleppfisches (12) in der zweiten Position annähernd null ist.

4. Schleppfisch nach einem der vorhergehenden Ansprüche, **dadurch gekennzeichnet, dass** er mindestens einen Flügel (27) umfasst, der hauptsächlich den hydrodynamischen Auftrieb (30) des Schleppfisches (12) in Abhängigkeit von der Ausrichtung des Gehäuses (23) in Bezug auf die Hauptrichtung (25) erzeugt, und dass der ausrichtbare Fortsatz ein Leitwerk (29) ist, das dazu konfiguriert ist, die Ausrichtung des Gehäuses (23) in Bezug auf die Hauptrichtung (25) zu ändern.

5. Schleppfisch nach Anspruch 4, **dadurch gekennzeichnet, dass** der Flügel (27) in Bezug auf das Gehäuse (23) feststehend ist.

6. Schleppfisch nach einem der Ansprüche 1 bis 4, **dadurch gekennzeichnet, dass** der Fortsatz ein ausrichtbarer Flügel (27) ist, der hauptsächlich den hydrodynamischen Auftrieb (30) des Schleppfisches (12) erzeugt.

7. Schleppfisch nach Anspruch 6, **dadurch gekennzeichnet, dass** er ein Leitwerk (29) umfasst, das in Bezug auf das Gehäuse (23) feststehend ist, wobei das Leitwerk (29) es ermöglicht, die Ausrichtung des Gehäuses (23) in Bezug auf die Hauptrichtung (25) aufrechtzuerhalten.

8. Schleppfisch nach einem der vorhergehenden Ansprüche, **dadurch gekennzeichnet, dass** der Schleppfisch (12) eine Schwenkverbindung (39; 40) umfasst, die das Drehen des Fortsatzes (27, 29) in Bezug auf das Gehäuse (23) ermöglicht, und dass die Schwenkverbindung (39; 40) von einem Angriffspunkt (56) einer Resultierenden (55-1, 55-2) spezifischer hydrodynamischer Auftriebskräfte des Fortsatzes (27, 29) versetzt ist, so dass sie den Übergang aus der ersten Position in die zweite Position unter der Wirkung des spezifischen hydrodynamischen Auftriebs des Fortsatzes (27, 29) ermöglicht.

9. Schleppfisch nach einem der vorhergehenden Ansprüche, **dadurch gekennzeichnet, dass** er einen Sensor (50, 51) umfasst, der es ermöglicht, einen Parameter zu messen, und dass eine Überschreitung eines Schwellenwerts durch den Messwert den Übergang der Verriegelung (45) in die entriegelte Konfiguration auslöst.

10. Schleppfisch nach einem der vorhergehenden Ansprüche, **dadurch gekennzeichnet, dass** er zwei ausrichtbare Fortsätze (27; 29) umfasst und dass die Ausrichtungen jedes der beiden Fortsätze (27; 29) koordiniert sind.

11. Schleppfisch nach einem der vorhergehenden Ansprüche, **dadurch gekennzeichnet, dass** der Schleppfisch (12) mit Strom versorgt wird, dass die Verriegelung (45) so konfiguriert ist, dass die Stromversorgung des Schleppfisches (12) die Verriegelung (45) in der verriegelten Konfiguration hält und dass eine Unterbrechung der Stromversorgung die Verriegelung (45) in die entriegelte Konfiguration übergehen lässt.

12. Schleppsystem, **dadurch gekennzeichnet, dass** es einen Schleppfisch (12) nach einem der Ansprüche 1 bis 8, ein Schiff (10), ein an dem Schleppfisch (12) befestigtes Seil (14) und auf dem Schiff (10) angeordnete Mittel zur Steuerung der Verriegelung (45) umfasst.

13. Schleppsystem nach Anspruch 12, **dadurch gekennzeichnet, dass** die Steuerungsmittel dazu konfiguriert sind, manuell ausgelöst zu werden.

14. Schleppsystem nach Anspruch 13, das einen Schleppfisch nach Anspruch 11 einsetzt, **dadurch gekennzeichnet, dass** die Steuerungsmittel einen Schalter (58) umfassen, der es ermöglicht, einen Stromversorgungskreis des Schleppfisches (12) zu öffnen.

15. Schleppsystem nach Anspruch 12, **dadurch gekennzeichnet, dass** es einen Sensor (50, 51) umfasst, der es ermöglicht, einen Parameter zu messen, und dass eine Überschreitung eines Schwellenwerts durch den Messwert den Übergang der Verriegelung (45) in die entriegelte Konfiguration auslöst.

## Claims

1. Fish intended to be submerged and towed by a cable (14), the fish (12) comprising a supporting structure (23) configured to move in water in a horizontal main direction (25) and at least one appendage (27; 29) configured to generate, for the fish (12), a hydrodynamic lift (30) directed downwards when the fish (12) moves in the water under the towing effect, the appendage (27; 29) is orientable between a first position generating a maximum value of the hydrodynamic lift of the fish (12) and a second position generating a reduced value of the hydrodynamic lift of the fish (12), **characterized in that** the fish (12) comprises a lock (45) which, in a locked configuration, keeps the appendage (27; 29) orientated in the first position and which, in an unlocked configuration, frees the orientation of the appendage (27; 29), **in that** the appendage (27; 29) is configured to move from the first position to the second position under the effect of a hydrodynamic lift specific to the appendage (27; 29), **in that** the fish (12) comprises two stops (46, 47) limiting the movement of the appendage (27; 29), **in that** the lock (45) keeps the appendage (27; 29) bearing against a first of the two stops (46) and **in that**, in the unlocked position, the appendage (27; 29) bears against a second of the two stops (47).

2. Fish according to Claim 1, **characterized in that** it comprises an explosive member configured to unlock the lock (45) .

3. Fish according to one of the preceding claims, **characterized in that**, in the second position, the hydrodynamic lift (30) of the fish (12) is substantially zero.

4. Fish according to one of the preceding claims, **characterized in that** it comprises at least one fin (27) mainly generating the hydrodynamic lift (30) of the fish (12) depending on the orientation of the supporting structure (23) with respect to the main direction (25), and **in that** the orientable appendage is a tail (29) configured to change the orientation of the supporting structure (23) with respect to the main direction (25) .

5. Fish according to Claim 4, **characterized in that** the fin (27) is fixed with respect to the supporting structure (23).

6. Fish according to one of Claims 1-4, **characterized in that** the appendage is an orientable fin (27) mainly generating the hydrodynamic lift (30) of the fish (12).

7. Fish according to Claim 6, **characterized in that** it comprises a tail (29) fixed with respect to the supporting structure (23), the tail (29) making it possible to maintain the orientation of the supporting structure (23) with respect to the main direction (25).

8. Fish according to one of the preceding claims, **characterized in that** the fish (12) comprises a pivot link (39; 40) allowing the rotation of the appendage (27, 29) with respect to the supporting structure (23) and **in that** the pivot link (39; 40) is offset from a point of application (56) of a resultant (55-1, 55-2) of efforts of hydrodynamic lift specific to the appendage (27, 29) so as to allow the movement from the first position to the second position under the effect of the hydrodynamic lift specific to the appendage (27, 29) .

9. Fish according to one of the preceding claims, **characterized in that** it comprises a sensor (50, 51) for measuring a parameter and **in that** the fact of a threshold value being exceeded by the measured value causes the lock (45) to move into the unlocked configuration.

10. Fish according to one of the preceding claims, **characterized in that** it comprises two orientable appendages (27; 29), and **in that** the orientations of each of the two appendages (27; 29) are coordinated.

11. Fish according to one of the preceding claims, **characterized in that** the fish (12) is electrically powered, **in that** the lock (45) is configured such that the powering of the fish (12) keeps the lock (45) in the locked configuration and such that a cut in power causes the lock (45) to move into the unlocked configuration.

12. Tow line **characterized in that** it comprises a fish (12) according to one of Claims 1-8, a ship (10), a cable (14) fixed to the fish (12), and, arranged on the ship (10), means for commanding the lock (45).

13. Tow line according to Claim 12, **characterized in that** the command means are configured to be triggered manually.

14. Tow line according to Claim 13 using a fish according to claim 11, **characterized in that** the command means comprise a switch (58) for opening a power supply circuit for the fish (12).

15. Tow line according to Claim 12, **characterized in that** it comprises a sensor (50, 51) for measuring a parameter and **in that** the fact of a threshold value being exceeded by the measured value causes the lock (45) to move into the unlocked configuration.
